# EUROPÄISCHE PATENTANMELDUNG

(11) **EP 0 802 285 A2**
(43) Veröffentlichungstag der Anmeldung: **22.10.1997**
(21) Anmeldenummer: 97106092.6
(22) Anmeldetag: 14.04.1997
(51) Int. Cl.: E02B 7/44, E02B 3/10

(54) **Hochwasserschutzsystem**

(30) Priorität: 15.04.1996 EP 96105886
(71) Anmelder: Trainer, Karl-Hermann, 57290 Neunkirchen (DE)
(72) Erfinder: Trainer, Karl-Hermann, 57290 Neunkirchen (DE)
(74) Vertreter: Thiel, Christian, Dr. Dipl.-Chem.

(57) **Zusammenfassung**

Die Erfindung betrifft ein Hochwasserschutzsystem mit einem oder mehreren an Stützelementen (1) gelagerten Wandelementen (5) und Dichtelementen (8) zwischen den Stützelementen (1) und Wandelementen (5), bei dem die Stützelemente (1) an ihrer schutzseitigen oberen Kante Halterungen (10) aufweisen, in denen das oder die Wandelemente (5) mit komplementären Halteelementen (9) gelagert sind und die Wandelemente (5) aus einem Wandteil (5a) und einem Konterteil (6) bestehen, von denen sich das Konterteil (6) gegen das oder die Stützelemente (1) abstützt, wobei sich die komplementären Halteelemente (9) auf der Wasserseite der Wandelemente (5) befinden und eine Dichtleiste (8) unterhalb der Halteelemente (9) ausgebildet ist, dergestalt, daß der Druck des anstehenden Hochwassers auf die Dichtleiste (8) übertragen wird.

## Beschreibung

Die Erfindung betrifft ein Hochwasserschutzsystem mit einem oder mehreren an Stützelementen gelagerten Wandelementen und den notwendigen Dichtelementen. Ein solches Hochwasserschutzsystem besteht insbesondere aus einer Reihe nebeneinander angeordneter Stütz- und Wandelemente, von denen letztere im Bedarfsfall, etwa im Falle eines angekündigten Hochwassers, schnell zu einer Schutzwand aufgerichtet werden können.

Das erfindungsgemäße Hochwasserschutzsystem ist vielfältig zum Schutz v on beispielsweise Ortschaften und Verkehrsflächen gegen anstehendes Hochwasser im Bereich von Flußläufen oder Küsten einsetzbar. Es ist insbesondere an solchen Orten einsetzbar, an denen es darauf ankommt, eine permanente Trennung des zu schützenden Ortes von dem angrenzenden Gewässer zu vermeiden, eine solche Trennung aber schnell und effizient im Falle eines Hochwassers herbeizuführen.

Der Hochwasserschutz ist in hochwassergefährdeten Städten an größeren Flüssen, Seen und Küsten ein seit langem bestehendes Gebot und Problem. Zum einen gilt es, die Bevölkerung und auch öffentliche Einrichtungen vor den Auswirkungen gelegentlich oder periodisch auftretender Hochwässer zu schützen. Zum anderen sind aber Hochwasserschutzmaßnahmen, die dne Zugang zum Gewässer versperren oder erschweren, häufig aus politischen oder wirtschaftlichen Gründern nicht durchsetzbar. Insbesondere in innerstädtischen Bereichen einer Reihe von größeren Städten können deshalb keine festen Deiche oder Wände errichtet werden. In vielen Fällen erschweren auch entlang von Flußläufen verlaufende Versorgungsleitungen und Verkehrswege die Verbesserung bestehender oder den Aufbau neuer Hochwasserschutzssysteme. Andererseits haben die in jüngster Zeit zu höheren Scheitelpunkten auflaufenden Hochwässer eine Verbesserung der Hochwasserschutzmaßnahmen geboten erscheinen lassen.

Zur Verbesserung des Hochwasserschutzes ist man beispielsweise in Köln dazu übergegangen, die Innenstadt bei drohendem Hochwasser mit mobilen Hochwasserschutzwänden zur Wasserfront hin abzusichern. Diese Maßnahme hatte sich in der Vergangenheit durchaus bewährt. Es hat sich aber gezeigt, daß diese mobilen Schutzwände den immer häufiger und höher auftretenden Hochwässern nicht mehr gerecht werden. Insbesondere ist ihre Höhe und Belastbarkeit nicht für die mit immer höheren Scheitelwellen auftretenden Hochwässer jüngeren Datums ausgelegt. Da die zunehmende Versiegelung der Landschaft und Begradigung der Flußläufe aber weiterhin die Gefahr von schweren Hochwässern verstärkt, besteht Bedarf an belastbaren und schnell aufrichtbaren Hochwasserschutzwänden.

Hinzu kommt, daß im Rahmen der dichter werdenden Besiedelung auch der Flußufer und der Innenstadtbereiche die Höhe der hochwasserbedingten Schäden außerordentlich zunimmt. Die in früheren Zeiten weniger häufig und weniger stark auflaufenden Hochwässer konnten noch toleriert werden, solange der durch das Hochwasser angerichtete Schaden ein gewisses Verhältnis zu den Kosten der Schutzmaßnahmen nicht überstieg. Die inzwischen gestiegenen Scheitelpunkte von Hochwasserwellen und dichteren Besiedlungen bedingen aber immer größere Schäden, die durch die weiter steigende Tendenz der Hochwässer weiter verstärkt werden. Insbesondere besteht nunmehr ein Bedarf an einem zuverlässigen Schutzsystem, mit dem derartige Schäden abgewandt werden.

Im Rahmen des Schutzes von Wohn- und Industrieanlagen ist es ferner wünschenswert, über ein Schutzwandsystem zu verfügen, mit dem im Bedarfsfalle schnell eine Auffangmöglichkeit oder eine Ableitung für plötzlich auftretenden Wasseranfall geschaffen werden kann, beispielsweise auch von Löschwasser im Brandfall. Entsprechendes gilt für ablaufende Flüssigkeiten in Tanklagern und dergleichen.

Aufgabe der Erfindung ist daher die Bereitstellung eines Hochwasserschutzsystems, mit dem private oder öffentliche Einrichtungen vorzugsweise im Kernbereich hochwassergefährdeter Städte zuverlässig geschützt werden können, ohne aber bei Normalwasser den Wasserzugang oder den Verkehr zu behindern. Das Hochwasserschutzsystem sollte vorzugsweise im Ruhezustand als Verkehrsfläche nutzbar sein und bei der Anlage mit einem Minimum an Erdbewegungen auskommen und insbesondere an bestehende Versorgungsleitungen anpaßbar sein, ohne daß die Funktionsfähigkeit eingeschränkt wird.

Diese Aufgabe wird mit einem Hochwasserschutzsystem der eingangs genannten Art gelöst, bei dem die Stützelemente an ihrer schutzseitigen Oberkante Halterungen aufweisen, in denen das oder die Wandelemente mit komplementären Halteelementen lösbar gelagert sind, und die Wandelemente aus einem Wandteil und einem Konterteil bestehen, von denen sich das Konterteil gegen das oder die Stützelemente abstützt, wobei sich die komplementären Halteelemente auf der Wasserseite der Wandelemente befinden und eine Dichtleiste unterhalb der Halteelemente ausgebildet ist, dergestalt, daß der Druck des anstehenden Hochwassers auf die Dichtleiste übertragen wird.

Das erfindungsgemäße Hochwasserschutzsystem besteht aus fest installierten Stützelementen einerseits und beweglichen Wandelementen, die über die notwendigen Dichtelemente verfügen, andererseits. Die Wandelemente können entfernbar sein oder aber mit den Stützelementen schwenkbar verbunden sein. In jedem Fall werden die Wandelemente bei Aktivierung des Systems in aufgerichtetem Zustand so an den Stützelementen gehaltert, das sie eine aufrecht stehende Wand bilden und durch den Anpreßdruck des anstehenden Hochwassers in ihrer Position festgehalten werden. Die Wandelemente werden manuell aufgerichtet und können ohne spezielle Werkzeuge in ihre Schutzposition gebracht werden.

Die Wandelemente selbst bestehen aus einem Wandteil, der das anstehende Hochwasser auffängt und einem Konterteil, der die Wand gegen die Stütz- oder Bodenelemente abstützt. Die Stützelemente weisen dazu Halterungen auf, in die die Wandelemente mit komplementären Halteelementen eingelassen oder eingeklinkt werden. Die Halterungen der Stützelemente befinden sich auf der dem Hochwasser abgewandten Seite der Stützelemente im Bereich von deren Oberkante, die komplementären Halteelemente der Wandelemente auf deren der Wasserseite zugewandten Seite.

Die Wandelemente selbst weisen die notwendigen Dichtelemente auf, um einerseits eine Abdichtung gegen die Stützelemente und andererseits untereinander herbeizuführen. Dazu befindet sich unterhalb der Halteelemente eine Dichtleiste, die gegen die Stützelemente wirkt und durch den Anpreßdruck des anstehenden Wassers fest gegen die Stützelemente gepreßt wird. Auf diese Art und Weise wird erreicht, daß sich bei steigendem Hochwasser die Dichtwirkung dieser Dichtleiste stets verstärkt. Die Stützelemente bestehen zweckmäßigerweise aus einer Betonschwelle oder -mauer oder einer entsprechenden Konstruktion in Mauerwerk. Je nach Untergrund können aber besondere Konstruktionen erforderlich werden, so beispielsweise die Ausbildung in Form einer Spundwand, um eine tiefgehende Verankerung in beispielsweise losem sandigem Untergrund herbeizuführen.

Gemäß einer bevorzugten Ausführungsform umfaßt das erfindungsgemäße Hochwasserschutzsystem wasserseitig zu den Stützelementen eine flach ausgelegte Aufnahme für die Wandelemente in Ruhelage, in die diese bei Normalwasser eingeschwenkt werden. In eingeschwenktem Zustand bilden die Wandelemente eine nutzbare Verkehrsfläche. Auf der der Wasserseite abgewandten Seite der Stützelemente befindet sich dann eine Einschwenkkammer, in die die Wandelemente mir ihren Konterteilen eingesenkt werden, wenn die Wand aufgerichtet wird. In diesem Fall besteht das Hochwasserschutzsystem aus insgesamt 4 Elementen, der rückwärtig verlaufenden Einschwenkkammer, die zweckmäßigerweise als Kanal ausgebildet ist, einer wasserseitig davor verlaufenden Mauer oder Schwelle als Stützelement, an der die Wandelemente beweglich gelagert sind, den Wandelementen selbst sowie der wasserseitig parallel zur Mauer oder Schwelle verlaufenden Aufnahme, in die die Wandelemente abgesenkt werden, wenn sie nicht mehr gebraucht werden. In jedem Fall bildet die Mauer oder Schwelle mit ihrem Kopfteil die wasserseitige Begrenzung der Einschwenkkammer oder des als Einschwenkkammer vorgesehenen Kanals. Die Ausbildung der Einschwenkkammer als Kanal hat den Vorteil, daß trotz der vorhandenen Dichtungen einsickerndes Wasser aufgefangen und mittels Pumpen oder eines Drainagesystems abgeführt werden kann.

Gemäß einer zweiten bevorzugten Auführungsform besteht das erfindungsgemäße Hochwasserschutzsystem, insbesondere wenn keine besonders hohen Wasserstände zu erwarten sind, aus einer einfachen Mauer oder Schwelle, beispielsweise einer Kaimauer, in der Halterungen für darin einklinkbare Wandelemente vorgesehen sind. Im Falle eines anstehenden Hochwassers werden die separat gelagerten Wandelemente dann in die vorgesehenen Halterungen eingeklinkt und in ihrer Position mit Spannhebeln oder dergleichen feiert. Auch in diesem Fall befinden sich die Wandelemente an der Schutzseite der als Stützelemente dienenden Kaimauer im Bereich von deren Oberkante.

Für die Lagerung der Wandelemente an den Stützelementen kommen sowohl Halterungen und Haltelemente in Frage, die eine schwenkbare Lagerung der Wandelemente ermöglichen als auch solche, bei denen die Wandelemente in ihrer Position feiert sind.

Eine bevorzugte Ausführungsform für eine schwenkbare oder bewegliche Lagerung der Wandelemente besteht aus Halterungen, die in Form von horizontal verlaufenden Bolzen in Taschen an der dem Wasser abgewandten Seite der Stützelemente angeordnet sind. Die komplementären Halteelemente der Wandelemente bestehen beispielsweise aus rechtwinklig zu den Wandelementen verlaufenden Aufnahmen oder Gabeln, die mit ihrer offenen Seite zum Konterteil des Wandelements weisen und die als Halterungen vorgesehenen Bolzen an den Stützelementen umfassen. Der durch die Taschen gewährte Spielraum erlaubt dabei das Absenken der Wandelemente in die Aufnahme. Eine Fixierung in den Halterungen kann durch geeignete Ausbildung der Gabel oder durch Sicherungsstifte erfolgen. Eine Anordnung der Halterungne schutzseitig im Abstand zu den Stützelementen ist ebenfalls möglich und für eien Reihe von Anwendungen, insbesondere bei Spundwänden oder schutzseitig geneigten Wandelementen empfehlenswert. In diesem Fall kann sich die Dichtleiste am Kopf des Konterteils befinden und gegen dne Boden der Einschwenkkammer abdichten. Das Konterteil weist dann ein zusätzliches Distanzelement auf, das Stützelement wirkt.

Sowohl für die Fixierung der Wandelemente in der aufrechten Position als auch - bei der schwenkbaren Ausführungsform - in der abgesenkten oder Ruheposition können Verriegelungen vorgesehen sein.

Ein alternatives Halterungssystem für die Fixierung der Wandelemente an den Stützelementen besteht beispielsweise aus an der Wasser abgewandten Seite der Stützelemente angeordneten Stahlwinkeln, die an der dem Wasser abgewandten Oberkante der Stützelemente angeordnet sind und die Aufnahmen für die komplementären Halteelemente der Wandelemente aufweisen. Diese Aufnahmen bestehen beispielsweise in Ausnehmungen in regelmäßigen Abständen, in die die als Klemmhebel ausgebildeten komplementären Halteelemente der Wandelemente, die rechtwinkling zum Wandelement an dessen Wasserseite verlaufen und mit ihrer Eingriffseite bzw. dem Klemmteil zum Konterteil des Wandelements weisen, eingreifen.

Das erfindungsgemäße Hochwasserschutzsystem ist zweckmäßigerweise so ausgelegt, daß die Wandelemente leicht zur Schutzseite geneigt sind. Diese Neigung bewirkt, daß der orthogonal auf die Wand wirkende Wasserdruck in ein Horizontal- und Vertikalkomponente zerlegt wird. Hierdurch ergibt sich eine Druckentlastung und zugleich eine geringere Tendenz der Wandelemente zur Deformation unter dem Wasserdruck. Eine solche Neigung beträgt zweckmäßigerweise weniger als 15° von der Vertikalen, insbesondere etwa 5 bis 10°.

Diese Neigung zur Schutzseite hin kann einmal durch eine entsprechende Ausgestaltung der Stützelemente erfolgen. Alternativ können die Wandelemente eine entsprechende Abwinklung im Bereich der Halteelemente aufweisen. Es ist aber auch möglich, durch geeignete Dimensionierung der Halteelemente und der am unteren Ende der Wandelemente verlaufenden horizontalen Dichtleiste wie durch Widerlager zur Abstützung der Wandelemente an den Stützelementen eine vorgegebene Neigung einzustellen und/oder eine Feinjustierung vorzunehmen. Widerlager in Form einer horizontal verlaufenden Metallleiste an den Stützelementen in Höhe der Dichtelemente sind auch zur Verbesserung der Dichtwirkung zweckmäßig.

Die erfindungsgemäßen Wandelemente des Hochwasserschutzsystems weisen zweckmäßigerweise an ihren Seiten Falze auf, in denen die seitlichen Dichtungen angeordnet sind. Die Falze können dabei nach Art der Türfalze ausgebildet sein, durch entsprechende Rücksprünge an den Kanten, oder aber durch die Anordnung seitlich vorstehender Leisten oder Flansche, die mit auf dem benachbarten Wandelement angeordneten Gummidichtungen zusammenwirken. In diesem Fall ist es erforderlich, daß die Wandelemente in definierte Reihenfolge aufgerichtet werden, so daß das Anschlagen jedes weiteres Wandelements an den Flansch oder Anschlag des vorangehenden gewährleistet ist.

Die Dichtungen bestehen aus üblicherweise eingesetzten Gummiwülsten oder Gummilippen oder anderen Materialien, beispielsweise auch solchen, die unter Einwirkung von Wasser aufquellen und dadurch die Dichtwirkung verstärken.

Das erfindungsgemäße Hochwasserschutzsystem mit den schwenkbaren Wandelementen weist Einzelelemente in Breiten von beispielsweise 1,0 bis 1,5 m und Höhen von 1,0 bis 1,5 m auf. Die Abmessungen werden den Anforderungen an die zu erwartende Hochwasser- und Sicherheitshöhe angepaßt. Die Abmessung der Wandelemente werden auch unter Berücksichtigung des Gesamtgewichts getroffen, da eine manuelle Handhabung vorgesehen ist.

Damit eine Befahrbarkeit durch Fahrzeug im Ruhezustand möglich ist, bestehen die Wandelemente beispielsweise aus äußeren Stahlblechen, die durch einen eingelegten Gitterrost verstärkt sind. Auf diese Weise wird eine Gewichtsersparnis erzielt. Die Gesamtkonstruktion ist zweckmäßigerweise verzinkt oder durch Anstrich gegen Korrision geschützt.

Es versteht sich, daß das erfindungsgemäße Hochwasserschutzsystem am Ende der Wandelemente jeweils über einen geeigneten Anschlag an Pfeiler oder Gebäude abgesichert ist und der dort entsprechende Dichtungen aufweist. Ein solcher Anschlag kann beispielsweise aus einem U-Stahlprofil bestehen, welcher mit Dichteinlage an einem Pfeiler angedübelt ist. Eine solche Dichteinlage kann in Ruhestellung durch eine leichte befestigende Schutzkappe aus Metall gegen Beschädigang geschützt werden.

Zum Aufrichten der Hochwasserschutzwand wird das erste Wandelement mit einem Winkelhebelverschluß an eine angrenzenden Gebäudeseite oder einem Pfeiler gesichert. Das nächste Wandelement wird aufgerichtet und gegen das erste Element verriegelt. Analog erfolgt das Aufrichten und die Absicherung bis zum letzten Element. Bei ansteigendem Hochwasser sorgt der Wasserdruck für die Standsicherheit des Systems und den notwendigen Anpreßdruck für die Dichtelemente.

Mit verstärkten Wandelemente und einer soliden Stützkonstruktion in Form einer im Boden tief verankerten Betonschwelle oder Spundwand sind auch durchaus Bauhöhen von bis zu 2,50 der 3,0 m möglich.

Bei der alternativen, nicht schwenkbaren Ausführungsform werden leicht handhabbare Wandelemente aus Stahlblech, beispielsweise in Einzelbaulängen bis zu 1,5 m und Höhen von bis zu 1,0 m , von Hand auf eine bestehende Schutzmauer, beispielsweise eine Kaimauer aufgesteckt. Hierfür ist an der Kante der Kaimauer die auf der Schutzseite liegt, ein Stahlwinkel eingebaut, der entsprechende schlitzförmige Aussparungen an seiner Oberseite aufweist. Durch Klemmhebel werden die Wandelemente am Stahlwinkel gesichert. Untereinander sind die Wände mit Spannhebeln verbunden.

Auch hier sorgt das steigende Hochwasser durch den Wasserdruck für die Standsicherheit und den notwendigen Anpreßdruck für die Dichtelemente.

Der Aufbau kann in kurzer Zeit ohne Einsatz von Hilfsmitteln oder Werkzeugen vorgenommen werden. Die Wandelemente werden in Normalwasserzeiten abseits von dem Stützelement, beispielsweise in einem Lagerhaus, aufbewahrt.

Die Erfindung wird durch die beiliegenden Abbildungen näher erläutert.

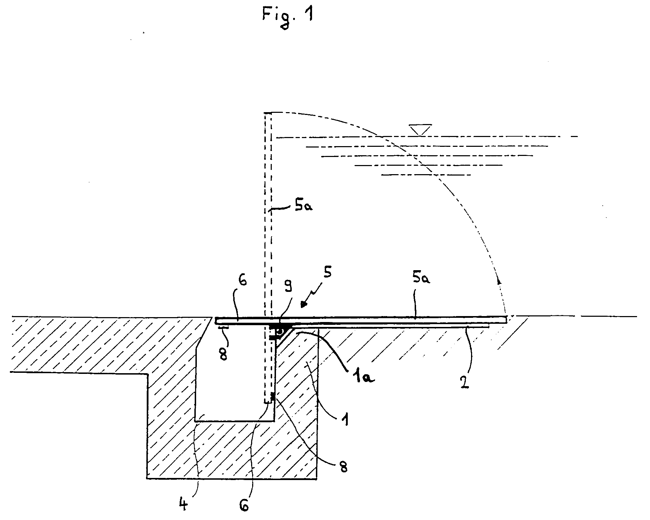

Fig. 1 zeigt eine bevorzugte Ausführungsform des erfindungsgemäßen Hochschutzsystems in einer schwenkbaren Variante des Wandelements. Im zu schützenden Bereich befindet sich ein Stahlbetonelement 1, an das sich auf der Schutzseite eine Einschwenkkammer 4 anschließt. Der Kopf des Stahlbetonelements reicht bis kurz unter die Erdoberfläche, oberhalb des Stahlbetonelements 1 und wasserseitig schließt sich eine Aufnahme 2 an.

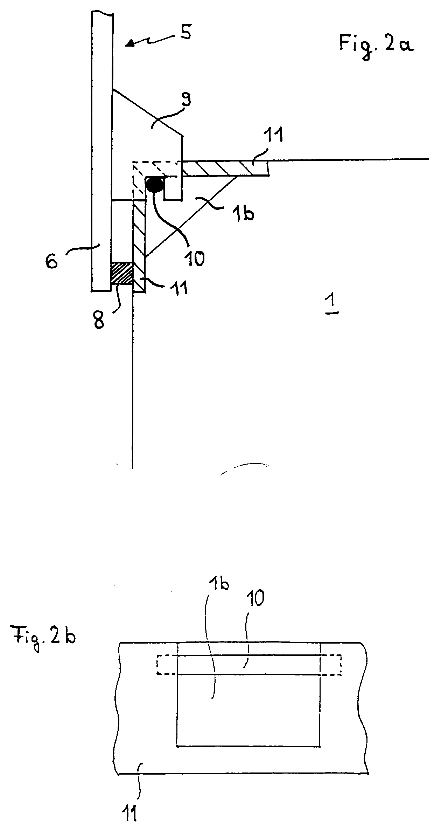

Am Kopf 1a des Stahlbetonelements befindet sich auf der der Einschwenkkammer 4 zugewandten Seite eine Tasche mit der Halterung für das Wandelement 5, wie in Fig. 2a näher ausgeführt. Das Wandelement 5 ist dort schwenkbar gelagert.

Das Wandelement 5 ist über das Halteelement 9 beweglich gelagert und an dem Stahlbetonelement im Bereich der Tasche (s. Fig. 2a/b) befestigt. Es ist im oberen Bereich 5a als eigentliche Schutzwand ausgeführt, die im Ruhezustand in der Aufnahme 2 eingebettet liegt. Der untere Teil des Wandelements 5 dient als Konterteil 6 und deckt im Ruhezustand die Einschwenkkammer 4 ab. In aufgerichtetem Zustand stützt sich das Konterteil 6 über die Dichtung 8 an der wasserseitigen Seitenwand der Einschwenkkammer 4 ab.

Das Wandelemenet 5 kann beispielsweise auf Verkehrslasten ausgelegt und als Verkehrsfläche ausgebildet werden.

Der Teil des Wandelements 5, der sich über der Einschwenkkammer 4 befindet, kann als Kontergewicht ausgebildet sein Dies erleichtert das Aufrichten der Schutzwand im Fall von Hochwasser.

Das Wandelement 5 stützt sich in aufgerichteter Stellung über die Dichtung 8 an der schutzseitigen Wand des Betonelements 1 ab. Um die Dichtwirkung zu verbessern und eine genaue Justierung der Wand zu ermöglichen, kann dort ein Wiederlager in Form eines Stahlbandes vorgesehen sein. Hierdurch kann eine genaue Justierung der Schutzwand in aufgerichteter Position mit einem vorgegebenen Neigungswinkel vorgenommen werden.

In der gezeigten Auführungsform ist das Betonelement 1 Teil einer Betonkonstruktion, die die gesamt Einschwenkkammer und eine daran angrenzende Verkehrsfläche definiert. Wasserseitig ist eine Verstärkung der Aufnahme 2 nicht unbedingt nötig; diese kann beispielsweise als Kiesbett mit Asphaltauflage oder Pflasterung ausgebildet sein.

Zweckmäßigerweise besteht die Schutzwand aus mehreren Wandelementen 5, die beispielsweise an den Seiten gegeneinander abgedichtet sind. Am Anfang und Ende der Gesamtschutzwand ist ein nicht näher beschriebenes Dichtelement an der angrenzenden Mauer-, Gelände- oder Deichkonstruktion vorgesehen.

Die Abbildung zeigt die Hochwasserschutzwand sowohl in der Ruheposition als auch in aufgerichteter Stellung, wobei die dreieckige Markierung die Wasserseite und den Hochwasserstand andeutet.

Fig. 2a zeigt im Detail eine bevorzugte Ausführungsform der Halterung, an der die Hochwasserschutzwand gemäß Fig. 1 beweglich gelagert ist. Das Stützelement 1 ist als Betonschwelle ausgebildet, die in Richtung der Hochwasserschutzwand verläuft. In diesem Betonbalken 1 sind in Abständen, die der Länge eines Schutzelement oder den Abständen der Halteelemente an den Schutzelementen entsprechen, Taschen 1b eingelassen, in denen frei ein Rundbolzen 10 parallel zur Kante der Schwelle 1 verläuft. Jede Tasche 1b ist zur Schaffung einer gleichmäßigen Oberfläche von einem Winkelelement 11 eingefaßt, das die Tasche und damit den in der Tasche verlaufenden Bolzen 10 frei zugänglich läßt Die Taschen sind zweckmäßigerweise als partielle, im wesentlichen gleichschenklige Kantenausschnitte ausgebildet.

Ein jedes Wandelement weist wasserseitig an seinem unteren Ende im Bereich des Übergangs zum Konterteil 6 ein rechtwinklig abstehendes gabelförmiges Halteelement 9 auf, dessen Gabel so dimensioniert ist, daß der Bolzen 10 darin aufgenommen werden kann und das Schutzelement um den Bolzen bewegt werden kann. Im aufgerichteten Zustand, wie in Fig. 2a gezeigt, stößt dann das Wandelement 5 mit seiner Dichtung 8 an den unteren Rand des Winkelelements 11, geschwenkt um den Bolzen 10. Das auf der Seite des Halteelements 9 anstehende Wasser verursacht einen hinreichend großen Anpreßdruck, um die Dichtung 8 zur Wirkung zu bringen.

Insgesamt hat die Betonschwelle 1 eine Winkel-Kanteneinfassung, die sich entlang der Oberkante auf der dem Wasser abgewandten Seite erstreckt und regelmäßige Taschen 1b freilläßt, in die Wandelemente 5 eingeklinkt werden (Fig. 2b). Die glatte Metalloberfläche der Winkeleinfassung 11 dientgleichzeitig als Widerlager für die Dichtung 8. Dadurch ist sichergestellt, das die Dichtigkeit herabsetzende Verschmutzungen leicht beseitigt werden können bzw. gar nicht anhaften.

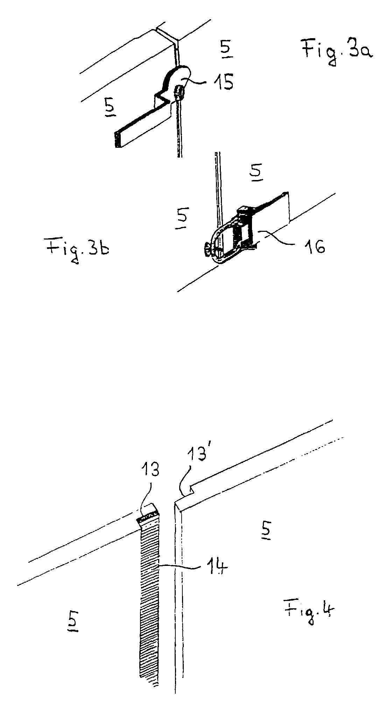

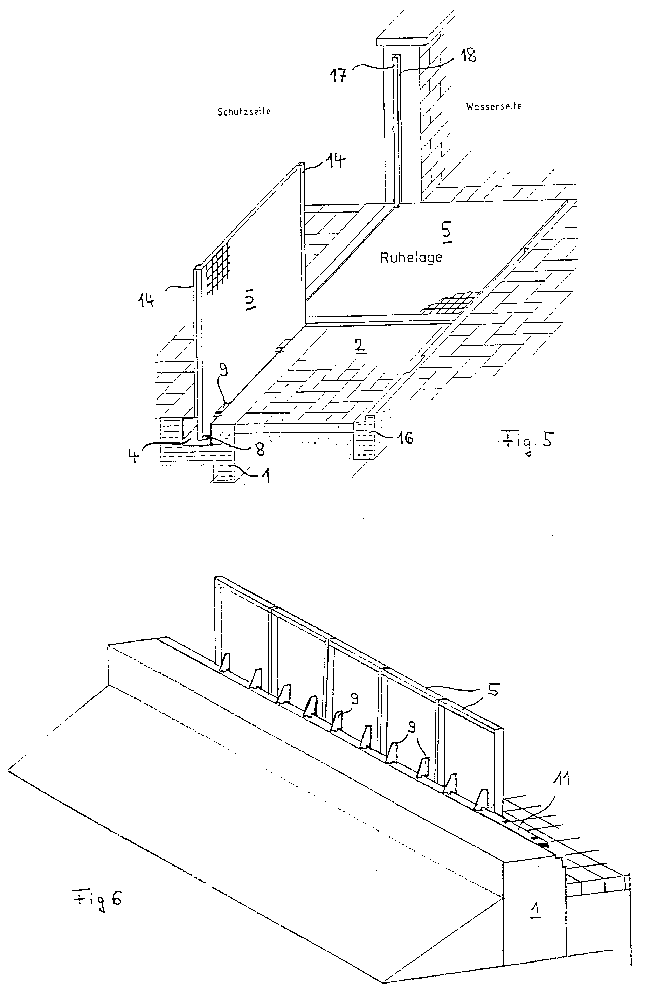

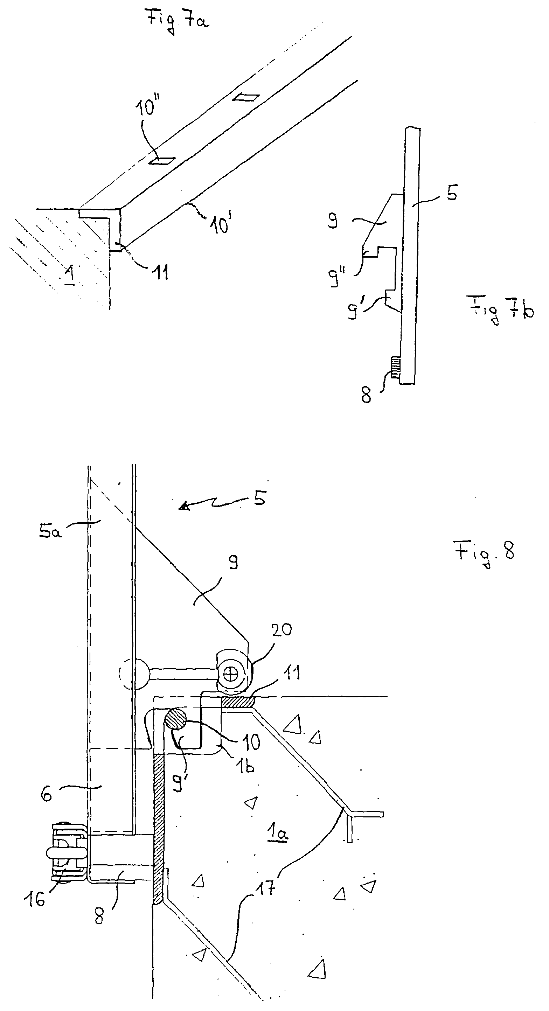

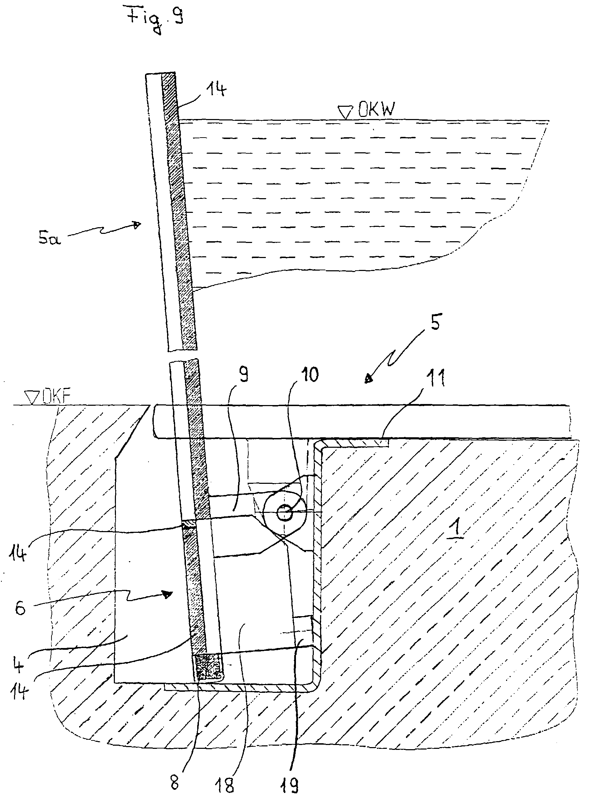

Fig. 3a und 3b zeigen Verriegelungselemente, mit denen die einzelnen Wandelemente 5 untereinander verbunden werden können. Zweckmäßigerweise werden im Kronenbereich der Schutzwand Spannriegel 15 verwandt, die um einen am Wandelement 5 vorgesehenen Knopf gedreht werden können. Am unteren Ende der Wandelemente bestehen diese Verriegelungen zweckmäßigerweise aus Spannverschlüssen oder -hebeln 16, die über einen Bügel um ein am benachbarten Wandelement 5 vorgesehenen Haltepunkt, beispielsweise einen Halteknopf, greifen.

Fig. 4 zeigt eine Möglichkeit, eine seitliche Dichtleiste 14 in einer seitlichen Falz 13 einer Schutzwand 5 vorzusehen. Dichtung 14 und Falz 13 wirken mit einer komplementären Falz 13' des benachbarten Wandelements 5 zusammen, wobei in der Falz 13' keine Dichtung vorgesehen ist.

Fig. 5 zeigt ein erfindungsgemäßes Hochwasserschutzsystem mit mehreren Wandelementen 5, von denen eines in aufgerichtetem Zustand und eines in Ruhelage in der Aufnahme 2 gezeigt wird. Jedes Wandelement 5 weist eine horizontale Dichtleiste 8 sowie vertikale Dichtungen 14 auf. Zusätzlich ist an der das Schutzsystem seitlich begrenzenden Mauer eine Leiste 17 mit einer vertikalen Dichtung 18 vorgesehen.

Die Wandelemente 5 bestehen aus Stahlblech, das zur Verstärkung mit einer inneren Stahlgitterkonstruktion versehen ist. Im unteren Bereich sind Halteelemente 9 vorgesehen, die mit entsprechenden Halterungen (nicht gezeigt) an der Betonschwelle 1 zusammenwirken. Die Aufnahme 2 besteht aus einer Pflasterung, ein Anschlag 16 in Form einer Betonschwelle dient der Festlegung der Wandelemente 5 in der Ruhelage.

Fig. 6 zeigt eine alternative Ausführungsform des erfindungsgemäßen Hochwasserschutzsystems, das aus einer Kai- oder Sperrmauer 1 und darauf aufgesetzten Wandelementen 5 besteht. Der Sperrmauer 1 vorgelagert ist eine Uferbefestigung, im rückwärtigen Bereich befindet sich eine übliche Pflasterung einer Verkehrsfläche. Die Wandelemente 5 sind über Halteelemente 9, die als Klemmhebel ausgebildet sind, in eine Leiste 11 mit Aussparungen an der schutzsseitigen Kante der Kaimauer 1 eingehängt. Ein jedes Wandelement besteht aus einem durch eine Rahmenkonstruktion verstärktem Stahlblech mit daran befestigten Halteelementen 9.

Fig. 7a zeigt die Halteleiste 11 auf der Kante des Stützelements 1 mit den in regelmäßigen Abständen dazu angeordneten Ausnehmungen oder Halterungen 10'', die auf gleicher Höhe an der Oberseite angeordnet sind. Die untere Kante 10' der Leiste 11 wirkt ebenfalls als Halterung. Diese Halterungen wirken mit den in Fig. 7b näher gezeigten Halteelementen 9 der Wandelemente 5 zusammen. Die Halteelemente 9 stehen rechtwinklig von den Wandelementen 5 ab und weisen zwei Nasen 9'' und 9' ab, die mit den Halterungen 10'' und der Kante 10' der Leiste 11 zusammenwirken. Die Halteelemente 9 werden bei der Montage der Wandelemente 5 oben mit der Nase 9'' in die Halterung 10'' eingesenkt und dann durch Andrücken mit der Nase 9' unter der Kante 10' festgelegt. Durch den Anpreßdruck des anstehenden Hochwassers werden die Wandelemente in ihrer Position zu der Leiste 11 und damit am Stützelement 1 fixiert. Die Dichtung 8 wird gleichzeitig gegen das Stützelement 1 gepreßt bzw. ein daran in entsprechender Höhe angeordnetes Widerlager. Durch den Anpreßdruck des anstehenden Hochwassers ergibt sich, je nach Ausführung des Halteelements 9, automatisch eine gewisse schutzseitige Neigung des Wandelements 5.

Fig. 8 zeigt im Detail eine Variante der erfindungsgemäßen Hochwasserschutzwand gemäß Fig. 6, bei der das Wandelement 5 über ein Formstahlelement 9 an einem Bolzen 10 gehaltert ist, der entlang der Oberkante im Kopf einer Betonmauer 1a verankert ist. Wie in Fig. 2a/2b gezeigt verläuft der Rundbolzen 10 in Taschen 1b der Mauer, deren Kante im übrigen von einem Winkeleisen 11 gebildet wird. Das Winkeleisen 11 dient zugleich als Widerlager für die am Konterteil 6 des Wandelements 5 angeordneten Dichtelements 8, das in einem Profil angeordnet ist. Der Stahlwinkel 11 ist durch Spreizanker 17 im umgebenden Beton verankert.

Das Wandelement 5 besteht aus einer stabilisierenden Rahmenkonstruktion und der eigentlichen, von einem Stahlblech gebildeten Wand. Zur Fixierung des Wandelements 5 in seiner aufrechten Position ist das Halteelement 9 im Bereich der Aufnahme für den Rundbolzen 10 so ausgeschnitten, daß sich der Rundbolzen 10 hinter eine Nase 9' einklinkt. Am Wandelement 5 angeordnete Exzenterelemente 20 (Sprialexzenter), die sich auf der Oberseite des Stahlwinkels 11 abstützen, sorgen für eine Fixierung in der Position im übrigen bei anstehenden Hochwasser durch den Wasserdruck gewährleistet ist.

Fig. 9 zeigt im Detail eine Variante der Hochwasserschutzwand gemäß Fig. 1 wobei in der Abbildung das Dreieck OKW das anstehende Hochwasser kennzeichnet und das Dreieck OKF das schutzseitige Bodennniveau. Das Wandelement 5 wird zum einen in seiner horizontalen Ruheposition gezeigt, zum anderem im aufgerichteten Zustand mit dem oberen Wandteil 5a und dem Konterteil 6.

In der Variante gemäß Fig. 9 ist das Wandelement 5 an der Seitenwand der Betonschwelle 1 innerhalb der Einschwenkkammer 4 gehaltert. Die Halteelemente bestehen aus einem endständig mit einer Bohrung versehenen Flachstahlprofil 9. Die Halterung 10 an der Betonschwelle 1 verläuft parallel zur Seitenwand in der Einschwenkkammer 4 und ist dort an dem Stahlwinkelelement 11, die dies seitliche Begrenzung der Betonschwelle 1 bildet, an Flachstahlprofilen verankert. Der Stahlwinkel 11 verläuft entlang der Kante der Betonschwelle 1 von der Oberseite über die Seitenwand bis zum Boden der Einschwenkkammer 4 und dient gleichzeitig als Widerlager für das Wandelement 5.

Das Wandelement 5 zeigt Dichtungen, die im Wandteil 5a wasserseitig und im Konterteil 6 schutzseitig angeordnet ist und mit entsprechend angeordneten Flanschen des Nachbar-Wandelements zusammenwirkt. Eine horizontal verlaufende Abschlußdichtung 8 am Boden der Einschwenkkammer 4 angeordnet und wirkt gegen das Konterteil 6 bzw. gegen dessen Stirnseite. Desweiteren weist das Wandelement 5 an seinem Konterteil 6 ein Kontergewicht 18 auf, das die Handhabung der Wand erleichtert und über ein Distanzelement 19 gegen den vertikalen Abschnitt des Stahlwinkelprofils 11 wirkt, der die seitliche Begrenzung der Betonschwelle 1 zur Einschwenkkammer 4 bildet.

Die an den Wandelementen vorgesehenen Dichtungen können in Profilschienen angeordnet sein und sind vorzugsweise aus einem erprobten Werkstoff beispielsweise EPDM, gefertigt. Die vertikalen Dichtungen zwischen den Wandelementen sind von gleichem Aufbau und aus gleichem Material. Der T-Stoß, an den die Dichtungen aufeinanderstoßen, bedarf der sorgfältigen Montage an den einzelnen Elementen und wird zweckmäßigerweise durch Hebelverschlüsse gesichert, wodurch sich zusätzlich eine horizontale Anpreßkraft von Element zu Element ergibt.

Es versteht sich, daß die nin dne einzelnen Ausführungsbeispielen gezeigten Elemente variiert und kombiniert werden können.

## Patentansprüche

1. Hochwasserschutzsystem mit einem oder mehreren an Stützelementen (1) gelagerten Wandelementen (5) und Dichtelementen (8, 14) zwischen den Stützelementen (1) und Wandelementen (5), dadurch gekennzeichnet, daß die Stützelemente (1) an ihrer schutzseitigen oberen Kante Halterungen (10) aufweisen, in denen das oder die Wandelemente (5) mit komplementären Halteelementen (9) gelagert sind und die Wandelemente (5) aus einem Wandteil (5a) und einem Konterteil (6) bestehen, von denen sich das Konterteil (6) gegen das oder die Stützelemente (1) abstützt, wobei sich die komplementären Halteelemente (9) auf der Wasserseite der Wandelemente (5) befinden und die Dichtleiste (8) unterhalb der Halteelemente (9) ausgebildet ist, dergestalt, daß der Druck des anstehenden Hochwassers auf die Dichtleiste (8) übertragen wird.

2. Hochwasserschutzsystem nach Anspruch 1, gekennzeichnet durch eine Aufnahme (2) für das oder die Wandelemente (5) auf der Wasserseite der Stützelemente (1) und eine Einschwenkkammer (4) auf der dem Wasser abgewandten Seite der Stützelemente (1), in die die Wandelemente (5) mit ihrem Konterteil (6) einsenkbar sind, wobei das oder die Wandelemente (5) an dem oder den Stützelementen (1) schwenkbar gelagert sind.

3. Hochwasserschutzsystem nach Anspruch 2, dadurch gekennzeichnet, daß die Einschwenkkammer (4) als Kanal ausgebildet ist und eine Vielzahl von aneinandergrenzenden Wandelementen (5) vorgesehen ist.

4. Hochwasserschutzsystem nach Anspruch 2 oder 3, dadurch gekennzeichnet, daß die Stützelemente (1) als Betonschwelle oder -mauer ausgebildet sind, deren Kopfteil (1a) die wasserseitige Begrenzung der Einschwenkkammer (4) bildet.

5. Hochwasserschutzsystem nach einem der Ansprüche 2 bis 4, dadurch gekennzeichnet, daß Auflager und/oder Verriegelungen zur Festlegung der Wandelemente (5) in ihrer Ruheposition vorgesehen sind.

6. Hochwasserschutzsystem nach Anspruch 1 mit in die Halterungen (10) einklinkbaren Halteelementen (9).

7. Hochwasserschutzsystem nach einem der Ansprüche 1 bis 6, dadurch gekennzeichnet, daß als Halterungen (10) an den Stützelementen (1) in Taschen (1b) an der dem Wasser abgewandten Seite der Stützelemente (1) horizontal verlaufende Bolzen vorgesehen sind.

8. Hochwasserschutzsystem nach Anspruch 7, dadurch gekennzeichnet, daß die Haltelemente (9) als rechtwinklig zu den Wandelementen (5) ausgebildete Gabelelemente ausgebildet sind, deren Gabeln die Bolzen (10) umgreifen.

9. Hochwasserschutzsystem nach einem der Ansprüche 1 bis 6, dadurch gekennzeichnet, daß als Halterung (10) der Stützelemente (1) an der Wasser abgewandten Seite der Stützelemente (1) ein Stahlwinkel (11) vorgesehen ist, der Aufnahmen für die komplementären Halteelemente (9) der Wandelemente (5) aufweist.

10. Hochwasserschutzsystem nach Anspruch 9, dadurch gekennzeichnet, daß die komplementären Halteelemente (9) der Wandelemente (5) als Klemmhebel ausgebildet sind, die rechtwinklig zum Wandelemente (5) an dessen Wasserseite verlaufen und in die Aufnahmen (10) des Stahlwinkels (11) eingreifen.

11. Hochwasserschutzsystem nach einem der Ansprüche 2 bis 5, gekennzeichnet durch schutzseitig an den Stützelementen (1) angeordnete Halterungen (10) und eine am Boden der Einschwenkkammer (4) angeordnete Dichtleiste (8), die gegen das Konterteil (6) abdichtet.

12. Hochwasserschutzsystem nach einem der vorstehenden Ansprüche, dadurch gekennzeichnet, daß die Stützelemente (1) oder Wandelemente (5) so ausgelegt sind, daß die Wandelemente (5) eine zur Schutzseite weisende Neigung behalten.

13. Hochwasserschutzsystem nach einem der vorstehenden Ansprüche, dadurch gekennzeichnet, daß zur Abstützung der aufgerichteten Wandelemente (5) an dem oder den Stützelementen (1) Widerlager zur Abstützung der Wandelemente (5) vorgesehen sind.

14. Hochwasserschutzsystem nach einem der vorstehenden Ansprüche, dadurch gekennzeichnet, daß die Wandelemente (5) in aufgerichtetem Zustand untereinander verriegelbar sind.

15. Hochwasserschutzsystem nach einem der vorstehenden Ansprüche, dadurch gekennzeichnet, daß die Wandelemente (5) an ihren Seiten Falze (13) aufweisen, in denen Dichtungen (14) angeordnet sind, die mit komplementären Falzen (13') angrenzender Wandelemente (5) zusammenwirken.
